# EUROPEAN PATENT APPLICATION

(11) **EP 4 338 860 A2**
(43) Date of publication of application: **20.03.2024**
(21) Application number: 24155397.3
(22) Date of filing: 16.09.2020
(51) Int. Cl.: B09B 3/00

(54) **RECYCLING OF FLAT PANEL DISPLAYS**

(30) Priority: 17.09.2019 GB 201913406
(62) Divisional of application: 20775243.7
(71) Applicant: Peregrine Technologies (Holdings) Limited, Cork, T23 KH58 (IE)
(72) Inventor: MIDDLETON, Arthur, Co. Kildare, W91 V1F6 (IE); SHEEHAN, Brian, Westmeath, N91 H725 (IE); MC LOUGHLIN, Cian, Westmeath, N91 H725 (IE)
(74) Representative: CSY London

(57) **Abstract**

The present invention relates to apparatus and a process for the disassembly of flat panel display units (FPDs) which each comprise a display screen provided on the front face of the FPD and a housing which accommodates the screen and associated electronic circuitry, the apparatus comprising: (i) a cutting station for receiving an end-of-life FPD, the cutting station being configured and arranged to make cuts into the FPD along cutting paths which permit detachment of the entire display screen, or a cut-out sub-unit of the display screen, from the FPD, (ii) an FPD characterisation station provided in advance of, or at, the cutting station, the characterisation station being adapted to measure and/or log one or more characterising parameters or identifiers of the FPD in advance of the cutting step, (iii) a data processing system in data communication with the FPD characterisation station, the data processing system being adapted to receive one or more of said characterising parameters or identifiers, and derive or attempt to derive therefrom an appropriate protocol for cutting the FPD display screen, and provide instructions in accordance with the protocol which are sent back to the cutting station so as to control the cuts, wherein an FPD database is associated with the data processing system, the FPD database being pre-loaded with cutting path instructions for a range of known FPDs, the database further comprising one or more stored characterising parameters or identifiers of each of the known FPDs. The data processing system is adapted to compare one or more characterisation parameter or identifier obtained from the characterisation station for a characterised FPD with one or more counterpart characterisation parameter or identifier stored in the database so as to identify a matching stored FPD or in the absence of this a null result. Apparatus as claimed in claim 2 wherein in the event of a null result, the characterisation parameter(s) or identifier(s) obtained are used to populate a new database entry for that FPD.

## Description

The present invention concerns the field of waste recycling, especially recycling of electrical and electronic goods. The invention relates in particular to the processing of devices which include flat panel displays (FPDs) such as televisions, public information screens and signs, advertising panels, computer monitors and lap-tops, tablets and computers with integrated flat panel displays.

Such FPDs have displaced cathode ray tube (CRT) displays and now form a significant waste stream in domestic and commercial waste. Several types of FPD are known. For example, there are simple liquid crystal displays (LCDs), backlit LCDs (with LED backlighting), plasma screens, organic light-emitting diode (OLED) screens, amongst others. With improvements in the technology screens rapidly become obsolete as colour rendition and screen resolution improve, and imaging codecs change. Thus, more FPDs enter the waste stream as technology improves.

With such a change in global FPD markets the traditional methods of disposal (such as simple shredding) create environmental and economic challenges. With a declining CRT market and a growing FPD market (400 million per year) a different approach to recycling is required. There is WHO legislation on the exposure of individuals to hazardous materials such as those contained within the FPD. These levels are specified on a per county basis under the health and safety and welfare legislation. With this understood, high throughput methods of processing FPDs is a requirement. Various companies exist in the market such as Blue box, Erdwich, ALR and MRT that provide different solutions for shredding and or cutting of FPDs.

Regulatory initiatives such as the European Commission's WEEE Directive (2012/19/EU) have directed that landfill dumping of electronic goods (including TV sets) be strictly limited, and recycling and repair encouraged. Manufacturers are obliged to finance a proportion of the collection, treatment and recovery costs of end-of-life electrical goods, including those which incorporate FPDs, based upon market share of the relevant class of goods. Special provisions exist for screens and monitors having an area of greater than 100 cm², including use of best practice in treatment and disposal of hazardous material, and reporting weight of products processed. Provisions which require cycling and treatment of electrical waste exist or are being developed in many other regions or countries worldwide, including states in Australia, Asia and the US.

US2005/0159068 discloses a method of recycling flat panel displays, in particular to permit re-use of the glass by removing lead-containing components. The display panels include two glass plates, which are separated by cutting, dissolving or melting the frit glass that joins them. This method clearly relates to plasma screens, as only these have the requisite lead content.

WO2011/073966 discloses a process for removing hazardous material from LCD displays backlit by cold cathode fluorescent tubes (CCFTs) and, in particular, separating the mercury contained in such tubes. This method involves cutting through the front of the housing which provides a border around the viewing screen. This is said to permit removal of the entire LCD panel and access to the tubes behind. These glass tubes are crushed to liberate the mercury-containing fluorescent gas, which is sucked into a collection device. The LCD screen cutting takes place indirectly, through the frame which defines the border of the housing, and then into the edge region of the LCD screen panel. This process is essentially manual insofar as the housing cutting is concerned and the tube crushing step is concerned. The process is also limited to use for LCD TVs backlit by CCFL tubes,

There is a need for a process and apparatus for disassembling FPD units to remove hazardous or valuable elements and which can be used for LCD, LED, OLED or plasma screen FPDs. There is a need for a process which may be automated so as to adapt to tailor the process for specific types and/or models of FPD without the need for operator input.

The present invention seeks to address one or more of the aforementioned problems with prior art processes and to provide a more efficient processing of end-of-life flat panel display units.

According to one aspect of the present invention there is provided apparatus for the disassembly of flat panel display units (FPDs) which each comprise a display screen provided on the front face of the FPD and a housing which accommodates the screen and associated electronic circuitry, the apparatus comprising: (i) a cutting station for receiving an end-of-life FPD, the cutting station being configured and arranged to make cuts into the FPD along cutting paths which permit detachment of the entire display screen, or a cut-out sub-unit of the display screen, from the FPD, (ii) an FPD characterisation station provided in advance of, or at, the cutting station, the characterisation station being adapted to measure and/or log one or more characterising parameters or identifiers of the FPD in advance of the cutting step, (iii) a data processing system in data communication with the FPD characterisation station, the data processing system being adapted to receive and one or more of said parameters or identifiers, and derive therefrom an appropriate protocol for cutting the FPD display screen, and provide instructions in accordance with the protocol which are sent back to the cutting station so as to control the cuts.

The FPD database may be associated with the data processing system, the FPD database being pre-loaded with cutting path instructions for a range of known FPDs. The FPD database preferably further comprises one or more stored characterising parameters or identifiers of each of the known FPDs.

The data processing system may be adapted to compare one or more characterisation parameter or identifier obtained from the characterisation station for a characterised FPD with one or more counterpart characterisation parameter or identifier stored in the database. This may permit identification of a matching stored FPD, or closest match to a stored FPD, or in the absence of these a null a result.

In the event of a match, the data processing may retrieve the appropriate protocol for cutting that FPD display screen, and send instructions in accordance with the protocol to the cutting station.

The characterisation station may comprise a weigh station adapted to weigh the FPD so as to obtain a measured weight value for the FPD, which value serves as one characterisation parameter. The weight value may be sent to the data processing system, the measured FPD weight value being compared with the associated database which comprises known FPD weights so as to obtain one or more candidate FPD matches based upon identical weight, or closest weight, thereby determining the appropriate cutting protocol for the screen cutting. This step may be used to differential the class of CCFL backlit LCD displays from LCD units backlit by LEDs, the relative weights of these being higher for those containing CCFL tubes.

The FPD characterisation station may comprise an optical scanner, and preferably a 3-D scanner. The optical scanner may be adapted to measure one or more dimensional variable of the FPD. The dimensional variable typically comprises one or more of: FPD housing width and/or length and/or diagonal extent, visible display screen width and/or length, and/or diagonal extent.

The dimensional variable or variables may be compared to corresponding known FPD dimension variables provided in the database, so as to permit matching based upon identical, or closest, dimension variable(s), with the appropriate cutting protocols paths thereby being retrieved.

The optical scanner's measured dimension variables may preferably concern the disposition of the screen area within the front face of the FPD, so as to determine appropriate cutting paths directly from the FPD itself.

In the event or a null match, or a match outside of a pre-determined acceptable tolerance, the characterisation parameter(s) or identifier(s) obtained may be used to populate a new database entry for that FPD, an in particular to construct a cutting protocol for that FPD unit.

Preferably the data processing system instigates the characterisation station to obtain further parameters and/or identifiers beyond those obtained when arriving at the null match or out of tolerance match. These may then be stored in said new database entry for that FPD.

So upon determination of an unknown FPD by the null match or intolerant match, the data processing system prompts the creation of a new cutting protocol for that FPD. The new protocol may be created using scanned dimension and configuration information obtained from the optical scanner.

The new cutting protocol may be provided at least in part by manual operator measurement and data entry. This is useful for unusually shaped or dimensioned FPDs, or one for which the scanner is ineffective.

The FPDs are usually provided with a visible unique identifier on an external surface of the FPD and the characterisation station comprises a visible identifier reader, comprising a camera or scanner. For example the visible identifier may comprise a product serial number or a barcode (usually) provided on the FPD unit at the time of manufacture, or in accordance with product labelling requirements or regulations for imported items.

The visible identifier reader may comprise an optical character recognition (OCR) vision tool for reading the serial number. The visible identifier reader may comprise a barcode/QR code reader, with software vision tool in the scanner or data processing system for reading the barcode. Rather than a dedicated OCR software tool, a simple camera may be provided to obtain an image of the identifier, which may then be subject to image processing and analysis to read the serial number or barcode.

The visible identifier reader obtains the unique identifier from the FPD and compares this with each entry of a pre-populated database of said identifiers.

The visible identifier may then be matched by the data processing system to an identity defined by the product brand and model number.

In a particularly useful aspect of the invention the data processing system is adapted to log the identity of each end-of-life FPD processed so as to provide an audit of FPD brands and/or models processed over time by the apparatus. This allows FPD manufacturers to demonstrate compliance with recycling regulations and rules for removal of hazardous or recyclable components.

In yet a further aspect of the invention there is provided a first robot arm for manipulating the end-of-life FPD into appropriate cutting orientations during the cutting process, in accordance with the cutting protocol.

The apparatus may comprise an infeed conveyor for conveying FPDs sequentially to the cutting station. This may be configured to receive each FPD for transit in a face down orientation.

The cutting station typically comprises at least one saw tool or milling tool for cutting the screen. One example of a suitable milling tool is a router. The cutting station may preferably comprise a first tool and at least one further tool for cutting the screen. The respective tools are adapted to provide generally parallel cutting paths separated by a span distance. In a preferred arrangement the first tool is fixed and wherein the further tool is adapted to travel with respect to the first cutting tool, so as to permit a variation in the cutting span to a predetermined distance depending upon one or more dimensions of the FPD screen to be cut. In an alternative arrangement a single milling tool, such as a router, may be provided and controlled to follow a generally rectilinear path when cutting the FPD screen. A robot arm may be used to perform this. This avoids having to rotate the screen between cuts, or provide two sawing tools operating at 90 degrees with respect to one another.

The cutting station may be provided with means for rotating the FPD about a vertical rotation axis after cutting of the display screen along paths in a first direction. This allows cutting of the screen along paths in a second direction which may be perpendicular to the first direction so as to produce the said generally rectilinear sub-unit of the display screen. The means for rotating may comprise the first robot arm.

In a preferred embodiment the FPDs are backlit LCD display FPDs which each comprise an LCD display screen which occupies a front face of the FPD and a housing which accommodates the LCD display screen, with one or more CCFL tubes or an LED array disposed adjacent a backside of the LCD display screen to serve as backlighting. The housing may include a front border region which serves as a frame around the LCD display screen and wherein the cutting station is adapted to cut directly into the LCD display screen along cutting paths which are offset inwardly from the front border region so as to create a generally rectilinear sub-unit of the display screen within the edges of the screen.

A screen sub-unit conveyor may be provided for conveying the screen sub-unit to a location spaced apart from the cutting station, for storage, disposal or further processing of the sub-unit.

The apparatus may further comprise a backlight treatment station, which station is for receiving each FPD chassis after removal of the screen sub-unit, the treatment station being provided with a mechanical means adapted to remove backlights rendered accessible the screen sub-unit removal. The mechanical means may comprise a mechanical tool for dislodging and/or disintegrating CCFL tubes, such as a router or grinder or flail or brush. Similarly, the mechanical means may comprise a mechanical tool for dislodging and removing LED backlighting arrays, such as a router or grinder or flail. The mechanical means or tool may be attached to and directed by a further robot arm.

The database may comprise for each of a series of backlit FPDs a pre-loaded mechanical treatment protocol to be followed by the mechanical means or tools when removing the backlighting of the instant FPD. The data processing system may be in data communication with the treatment station, the protocol guiding the operation of the mechanical means or tool.

The mechanical means preferably comprises a router, and routing takes place by scanning the router incrementally back and forth across and within the aperture defined by removal of the LCD screen sub-unit.

A detritus collector in the form of a hopper or chute may be provided under the backlight treatment station for collecting dislodged backlight elements or debris. In use, the first robot arm holds the FPD chassis angled face-down over the hopper or chute, so that any removed tube or LED material falls directly into the hopper or chute. FPD may be angled in an inclined orientation of 10 to 80 degrees from the vertical. By FPD chassis or carcass we mean the remnant of the FPD left after cutting of the screen.

The collector may be arranged and configured to feed collected material into a shredder/ crusher/compactor. Crushed or shredded tube material is used to fill storage containers which are hermetically sealed for disposal or further processing.

After backlight removal the robot arm is instructed to place the FPD carcass onto an exit conveyor for subsequent storage, downstream processing, recycling or disposal.

The apparatus may be is located in an isolation cell which conditions and/or removes from the internal air volume dust and debris generated in the process. This helps prevent dust hazard from arising from the cutting and routing, etc. In the case of CCFLs the gases released from crushing may contain poisonous mercury in the phosphor. Other harmful components may be present in dust or particles released, including heavy metals and explosive fine dust. The cell may be transgressed by infeed and outfeed conveyors, usually through isolation curtains.

The isolation cell may define a clean room environment provided with means for removal of air-entrained hazardous particles or gases. The process apparatus may include an air extraction system in which extraction vents are provided in the region of the cutting station and/or the backlight treatment station and/or the debris collector so that air-entrained debris ejected by or from the cutting and or backlight treatment stations is extracted and accumulated for disposal or recycling.

One or more air blowers may be provided adjacent the cutting station and/or backlight treatment station for driving off particles and dust created by the screen cutting and/or backlight dislodging.

The apparatus as associated process steps are described in the foregoing. The present invention of course includes the process which involves using the apparatus. The invention therefore also provides a process for the disassembly of FPDs which each comprise a display screen provided on the front face of the FPD and a housing which accommodates the screen and associated electronic circuitry, the process comprising providing apparatus as hereinbefore described, characterising the FPD and retrieving an appropriate cutting protocol from the data processing system, cutting the FPD in accordance with the protocol by making cuts into the FPD along cutting paths which permit detachment of the entire display screen, or a cut-out sub-unit of the display screen, from the FPD chassis, optionally treating the FPD chassis at a mechanical treatment station to remove or dislodge any backlights behind the display screen or screen sub-unit.

The invention also provides a process for the disassembly of FPDs which each comprise a display screen provided on the front face of the FPD and a housing which accommodates the screen and associated electronic circuitry, the process comprising providing apparatus as hereinbefore described, characterising the FPD and constructing an appropriate cutting protocol for that FPD, cutting the FPD in accordance with the protocol by making cuts into the FPD along cutting paths which permit detachment of the entire display screen, or a cut-out sub-unit of the display screen, from the FPD chassis, optionally treating the FPD chassis at a mechanical treatment station to remove or dislodge any backlights behind the display screen or screen sub-unit. The constructed cutting protocol may be stored as a database entry for that model of FPD, whereby the cutting protocol may subsequently be retrieved and utilized should the same model of FPD be identified in the characterisation step for a subsequently processed FPD.

The characterisation station may comprise a weigh station adapted to weigh the FPD so as to obtain a measured weight value for the FPD. Suitable weighing scales are well known. For example Henk Maas Weegschalen B.V. produces weighing scales integrated into inline conveyor systems and which register and store weigh data for conveyed articles. The weight value is sent to the data processing system, the measured FPD weight value being compared with an associated database which comprises known FPD weights so as to obtain one or more candidate FPD matches based upon identical weight, or closest, weight. If a match is made the appropriate cutting path information is used in the subsequent LCD screen cutting.

The cutting process any apparatus of the present invention provides a significant improvement in the processing of FPDs and facilitates automation of the process by use of robots and/or automated treatment stations.

In a preferred arrangement, the first saw tool is fixed in position and wherein the further saw tool is adapted to travel with respect to the first cutting tool. This permits a variation in the cutting span to a predetermined distance depending upon one or more dimensions of the FPD screen to be cut. With a larger screen the spans will be set to be wide, whereas with a smaller screen the span will be less wide. In the process the FPD is preferably delivered to the cutting station in a face-down orientation, with the cutting blades extending upwards to effect cutting of the screen panel. The cut-out screen sub-unit may then fall under gravity into, or down a ramp, into a collection bay or bin.

The cutting station may be provided with means for rotating the FPD about a vertical rotation axis, or for rotating the orientation cutting tools with respect to the FPD. Thus, after cutting of the LCD screen along paths in a first direction the screen may be rotated to allow cutting (using the same tool or tools) of the screen along paths in a second direction perpendicular to the first direction. These two pairs of parallel cuts produce the said generally rectilinear sub-unit of the LCD display screen. The means for rotating preferably comprises a robot arm, but could comprise a turntable. Alternatively, a second pair of cutting tools could be provided for cutting in the perpendicular direction, without rotating the FPD. The FPD can be held immobile while a robot arm equipped with a cutting tool provides said two pairs of parallel cuts.

The dimension variables may be combined with weight measurements to provide a more accurate, or rapid, characterisation of each FPD. The use of multiple characterising identifiers permits an accurate identification of an FPD model to be made. The dimension variable or variables may be compared to corresponding known FPD dimension variables provided in the database. This permits matching based upon identical, or closest, dimension variable(s), with the appropriate cutting paths thereby being retrieved from the database entry for the identified FPD.

In a particular aspect of the invention the optical scanner measures dimension variable(s) concerning the disposition of an LCD screen area within the front face of the FPD, so as to determine appropriate cutting paths directly from the FPD itself. This obviates the need for a stored database of FPD cutting paths, or, alternatively, permits a cross-check or confirmation of the stored values in a database (when available). This 'on the fly' determination of cutting paths may be invoked when a null match, or failure to get a closest match within an acceptable tolerance value, is obtained from the comparison with the database of FPDs, so that the FPD is determined to be unknown. Upon determination of an unknown FPD, the data processing system may establish a new database entry which is populated with characterisation variables and/or appropriate cutting paths.

The dislodgement and or detachment of CCFL tubes may be conducted by a router tool at the tube treatment station. Other tools such as mechanical brushes, grinders, crushers, flails, levers or probes could be used. The CCFL tubes are typically held at opposite ends in clasps (including electrical contacts). Further ties or clamps may be used to hold long tubes in place. The clasps and clamps are typically disposed on the front face of a back plate within the FPD housing, behind the LCD screen, especially in TV sets. In monitors and lap top screens a single pair of CCFL tubes may be present disposed parallel and spaced apart along opposite screen edges.

In another particular aspect of the invention a first robot arm may be provided. This may be provided between the cutting station and the treating station. The arm is suitable for holding and translating the FPD up to, or past, the optical scanner, or for lifting the FPD chassis from the cutting station.

This arm may then hold the FPD chassis at an orientation and location suitable for routing to take place at the treating station. The location is generally over a hopper or chute positioned at the tube treatment station so that tubes and tube debris fall into the hopper or chute from the FPD chassis. The collected tubes or tube debris may be conveyed into a shredder or crusher-compactor. Conveniently this may be located below the hopper or chute, to take advantage of gravity feed.

The crushed tube material maybe used to fill storage containers which are hermetically sealed for disposal or further processing. The tubes are typically contaminated with poisonous mercury, so must be isolated safely to avoid hazard.

The whole process may be carried out using apparatus located in a controlled room (HVAC) environment which removes air entrained hazardous particles or gases. The process apparatus incudes an air extraction system in which extraction vents are provided in the region of the screen cutting station and/or the conveyer. Air-entrained debris ejected by or from the screen cutting and or conveyer or crusher /shredder is extracted from the cutting or routing locations and accumulated for disposal or recycling. At the routing station a blower may be provided to blow air onto the FPD back panel which entrains surface particles and hazardous dust into an airflow which moves contaminated air away from the routing process.

Following is a description, by way of example only, of modes for putting the present invention into effect, with reference to figures of the accompanying drawings in which:
Figure 1 is a front view of a typical backlit LCD TV set to be recycled in accordance with the present invention.
Figure 2 is a schematic transverse cross-sectional view through the LCD TV of figure 1 (not to scale).
Figure 3 is another schematic transverse cross-sectional view through an LCD monitor that is backlit using two CCFLs and a light guide plate.
Figure 4 is yet another schematic transverse cross-sectional view of a backlit LCD TV with an array of LED backlights.
Figure 5 shows the backlit LCD TV of figure 1 with the position of cutting lines projected onto the front face of the screen.
Figure 6 is a schematic transverse sectional view of the TV of figures 1 and 2, shown after cutting and removal of a screen sub-unit by the method of the present invention.
Figure 7 is a top view of apparatus used in carrying out the method of the present invention.
Figure 8 is a perspective view of the same apparatus.
Figure 9 is a perspective view of the apparatus located in an isolation cell or room.
Figure 10 is a flowchart of the processing steps involved in processing a backlit LCD TV displays.
Figure 11 is a schematic transverse cross-sectional view through a monitor LCD with backlighting provided by two CCFLs and a light guide plate, as shown in figure 3, with cutting directions indicated.
Figure 12 is a flow chart of the processing steps involved in processing LCD monitors of the type shown in figure 11.

The present invention facilitates the use of a fully robotic (automated) system to depollute FPDs. It permits the automatic characterisation of FPDs by weighing, measuring dimensions, reading visual identifiers. This data can be used to find a match for pre-loaded data of specific FPDs, or can be used to build-up a database of such data to allow subsequent automatic identification. The data may be used to select the appropriate processing technique for each individual type of FPD.

The process and apparatus of the present invention is described in the following with reference to processing of back-lit LCD screens, such as those back lit by CCFL tubes or LEDs. However, the invention has broad application to the processing of virtually any FPD. The 'processing' is typically a partial disassembly to remove or gain access to components such as screens or backlights or PCBs or power supplies that may be recycled, or may need further treatment as hazardous waste, or for extraction of valuable materials.

The process typically involves removing the visible screen by cutting it out of its frame. This allows access to any backlights behind the screen. These may be removed at the routing station with a robot to remove the lights and holders for the FPD. The waste glass/backlights from the routing may be compressed by shredded before it enters the storage bins. The process equipment is usually freestanding inside a controlled atmospheric environment, with the aid of filtration, such carbon filtration.

The FPD screens are typically removed (cut out) in downward facing position. For TVs, the optical scanner finds the screen bezel and then cuts 0-12mm into the screen side of the bezel to a depth of 0-20mm.

For the processing of LCD computer monitors the cut is a 'full liberation cut' to remove the entire border regions typically by cutting to a depth of 40 -1 00mm through the entire monitor depth. The cuts are made 0-1 00mm inward from the top of the FPD. The cuts in the screen are made using readily available blades with inserts designed for cutting and/or grinding depending on the process.

Efficient processing in accordance with the present invention involves having access to an accumulation of end-of-life FPDs, typically back-lit LCD TV sets, as described in more detail hereinafter. These may be provided as discrete batches sourced from a waste processing plant, or as a generally continuous stream when the apparatus is integrated into an electrical waste processing plant.

As a preliminary step each FPD unit may be characterised by measuring its weight and/or by using other identifying characteristics such as dimensions.

Preferably cuts are made into the screen of the FPD leaving a border of LCD screen left, like a picture frame, in the FPD. This differs from previous methods which typically cut around the LCD screen so as to leave it intact. Cutting within the perimeter of the screen facilitates the removal of the screen, as it is usually attached to the FPD screen in the edge regions. Hence in the present method the screen typically falls away from the FPD chassis after cutting.

In one embodiment of the method, after the FPD is brand and model identified by weight it is then picked-up from a datum corner position on the weigh station using a robot arm.

A 3D scanner may be used to log the dimensions, shape and screen position so as to inform the subsequent processing cuts or machining.

The cuts may be made so as to leave a border 3-20mm thick of the LCD (glass) screen in the FPD, in the manner of a picture frame. This avoids the need (in prior art processes) to cut into the surrounding support frame or housing of the FPD.

Once the screen has been cut and the inner portion removed the CCFL back lighting tubes may be removed by a tool, such as a router. Preferably this is done using a robot with sensing technology for controlling location and proximity to the back pane of the TV and the CCFL light tubes. The FPD may be held by the arm at an angle to the ground allowing for the collection of debris in a hopper. This could also be complete by a static tooling station.

The liberation of the CCFL tubes and tube holders is achieved using a mill like cutting tool designed for this purpose, such as a router.

The apparatus will typically use two robots, one equipped with a grasping tool for lifting and moving (translating) the FPD between weighing station and routing station where the CCFLs are removed. The apparatus can be scaled by increasing the number of FPD feed streams and robot arms.

Offcuts which still hold CCFL tubes or pieces may be further treated by shredding these offcuts along with the liberated CCFL tubes.

The cutting robot may be provided with (or have associated therewith) air nozzles which blow at the FPD while the cutting process in underway, so as to disperse the tube contents. The nozzles may be adjacent suction ducts for removing harmful gas or air-entrained particles arising from the cutting.

The collection of FPD as an end of life waste product means many of the FPDs are damaged and 3D scanning can identify damaged FPDs and take the damage into account, or invoke manual processing if the damage is too severe for an automated process to continue.

It may be necessary to manually identify and select the FPD type in advance of processing. This is important because monitors without back lighting may require a different process to backlit TVs, and may require different cutting tools and gripper tools.

The infeed conveyer feeds the FPD into the machine with the screen facing down. At the end of the conveyer it reaches the identification and weighing station where the FPD is lifted to assess weight and read for make and model of FPD. It is gripped in a screen down orientation by the grip end of a robot arm.

The FPD may be 3D scanned before the arm moves the FPD to the screen cutting station. The arm positions the FPD face down on the screen cutting station. The 3-D scanner reads high differences, housing size, and shape and allows for damage by comparing a damaged element with a template example stored in the data processing system.

Once picked-up, the end of the robot arm effector (grip) monitors the grip finger position to insure the FPD does not distort. In the event of unexpected distortion the grip may be adjusted or removed and re-applied to obtain a better grip. Since the screen is the lowest area on the viewing face (LCD screen) of the FPD, this is cut first by cutting blades (wheels) which project upwards. The two longitudinal (X) and transverse (Y) cuts leave a picture frame of about 0-15mm of screen within the FPD. The cuts extend to a depth of about 5-100mm, depending upon the particular FPD.

As the screen is face down (screen down) while being processed allowed for any debris to be captured by dropping down under gravity from the cutting location. Debris may be collected under the cutting station.

In the cutting station one blade may be in a fixed position and the other moveable in the width direction so as to alter the cutting span. A conveyor may be used to feed the FPD into the cutting wheels to produce parallel elongate cuts. The FPD is fed through the screen cutting station by the robot in the manner of a table saw with the short edge leading and once this is cut is complete the robot raises up and rotates the FPD though 90 degrees to cut the long side. The blades may have a fixed height so that they do not travel in the Z. direction.

The liberated screens fall into a chute underneath the screen cutting station and then slide onto the screen outfeed conveyor. Any broken tubes caused by the screen cutting at this stage will fall through a gap between the chute and the conveyor and be diverted to the lamp shredder.

The tube shredding is conducted in a conventional shredder placed over the tube bins. A robot router is used to break the lamps for compaction and easier transport. They are removed by the robot from the FPD using a routing tool on the robot arm.

The circular saw blades vary in size from about 150mm to 480mm diameter and RPM from 2500 to 10000. The blades may be adapted for cutting or grinding.

In the process the screens are liberated from the FPD in the screen cutting station while being held by the end effector of the robot. This allows access to backlights by the robot arm for further processing (to removed remnant CCFL tubes) if required. The screen is held at an angle of between about 10-80 degrees off vertical. The routing robot routes out the backlight and holders from the FPD using a cutting tool. If fitted with hot and/or cold air systems, these assist in the dispersal of the debris into suitable collectors. So the CCFL tubes or shreds fall into the hopper to be fed into the shredder to be broken into particles. The shredders feed storage bins/containers with a hermetic seal which allows them to be transported safely for disposal or recycling. This ensures that the mercury containing hazardous waste is separated from the other machining dust and waste generated within the process apparatus by the cutting/routing.

Data from the FPD processing is logged and may be stored on the data processing or kept in the cloud for ease of remote access. The data logs each recycling event and, so far as is possible, the make and model of each FPD that is processed. This facilitates the accounting for reprocessing of electrical goods required by regulatory regimes in which manufacturers of FPD screens are responsible for contributing for recycling costs, so recyclers will be reimbursed for their re-processing. So the data stored is accounted for on a per FPD/TV as well as recording the overall numbers on a holistic level.

The entire process may be carried out in clean room environment using a HVAC system in which ducts exhaust emissions to the environment through a specifically designed carbon filtration system.

The use of robots allows us to automate the process and minimize human intervention within the machine. The speed of the process varies with FPD size from about 15 to about 80 second per FPD. LED displays are processed quicker and backlit CCFL and monitors quicker are than TV's. The FPD size also has an impact on timing of processing speed. This is a two step fully robotic process. This is not a recycling process it is depollution process to enable the next step of material separation before the components are eventually recycled as secondary raw material. After the depollution the FPD is ready for further processing.

### Specific embodiment

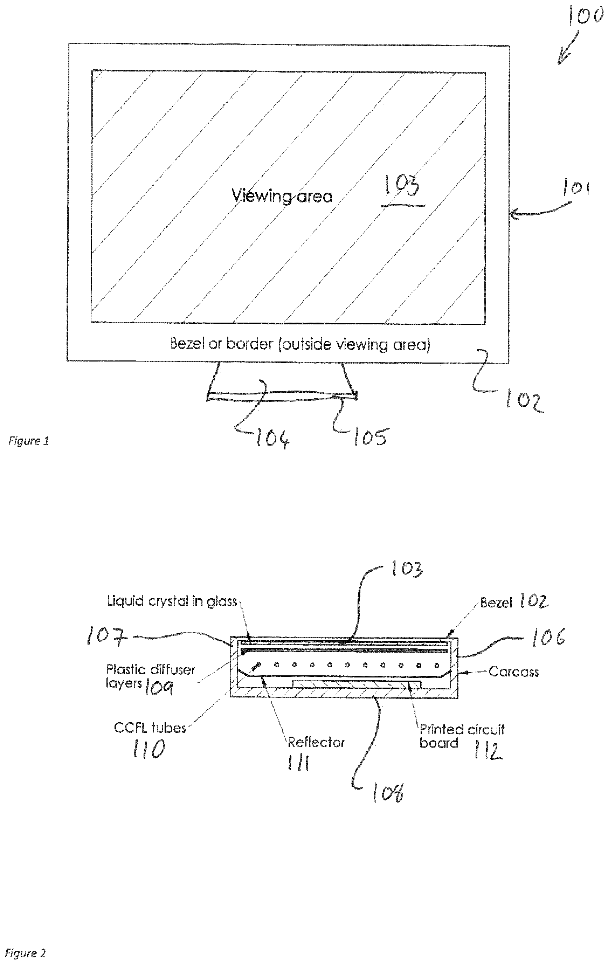

A first TV set is shown generally as 100 in figure 1. The TV set comprises a rectilinear housing 101 which forms a perimeter frame 102 around an LCD panel 103 which serves as the viewing screen. A lower end region of the housing is provided with a stand 104 which includes a horizontal base plate 105 which supports the TV set when in use.

In figure 2 sidewalls 106 and 107 and housing back 108 are shown. The LCD panel 103 sits behind the frame 102 and overlaps the underside regions of the frame. Under the LCD panel is a Perspex protective stratum/diffuser 109. Under the stratum is an array of generally cylindrical CCFL tubes 110 arranged parallel and extending longitudinally from side to side across the set. The tubes are accommodated in a metal reflector tray or back plate 111 at attached thereto by plastic retainers (not shown) Under the tray is a PCB layer 112 attached to an inside surface of the housing back 108.

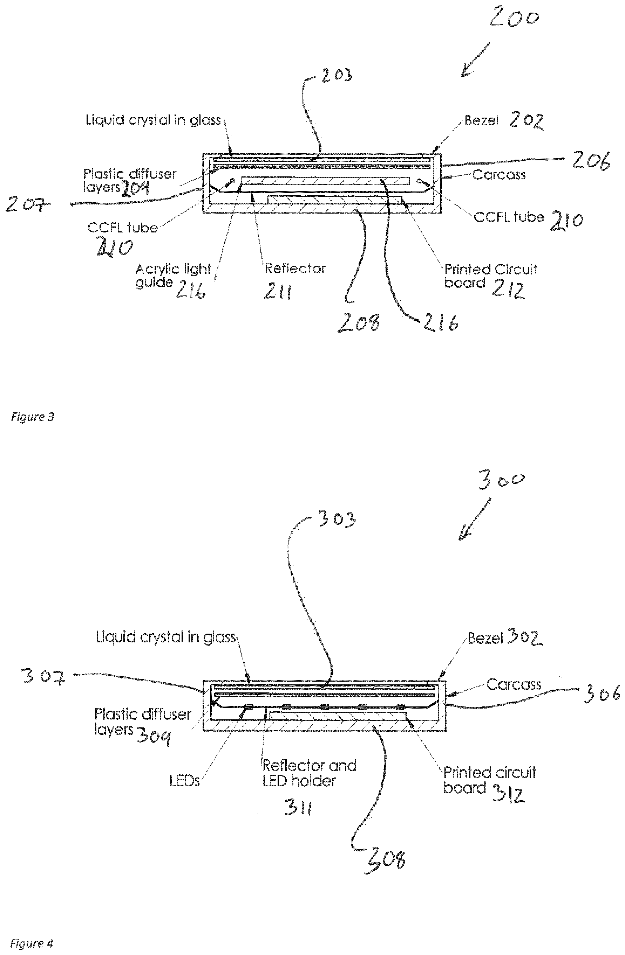

A backlit FPD monitor / laptop 200 arrangement is shown in figure 3, in which like elements are given corresponding numbering, but prefixed with a 2 rather than 1. Of note is that there are only two (somewhat larger) CCFL tubes 210 at spaced apart and parallel at opposite ends of the reflector tray 211. The tubes are located and held by plastic retainers (not shown). A Perspex plate 216 extends between the two spaced apart CCFL tubes 210 acts as a light guide/tube for electromagnetic radiation emitted from the tubes. The plate is provided with an upper surface treatment which guides light to emit upwards towards the diffuser and screen 203. This provides uniform illumination so as to provide indirect backlighting of the LCD panel from the CCFLs via the light guide.

In figure 4 and LCD FPD backlit using LEDs is shown generally as 300. As before, like feature are given like numbers, but in the 300 series. Instead of CCFL tubes, this FPD uses LEDs as the light source for backlighting.

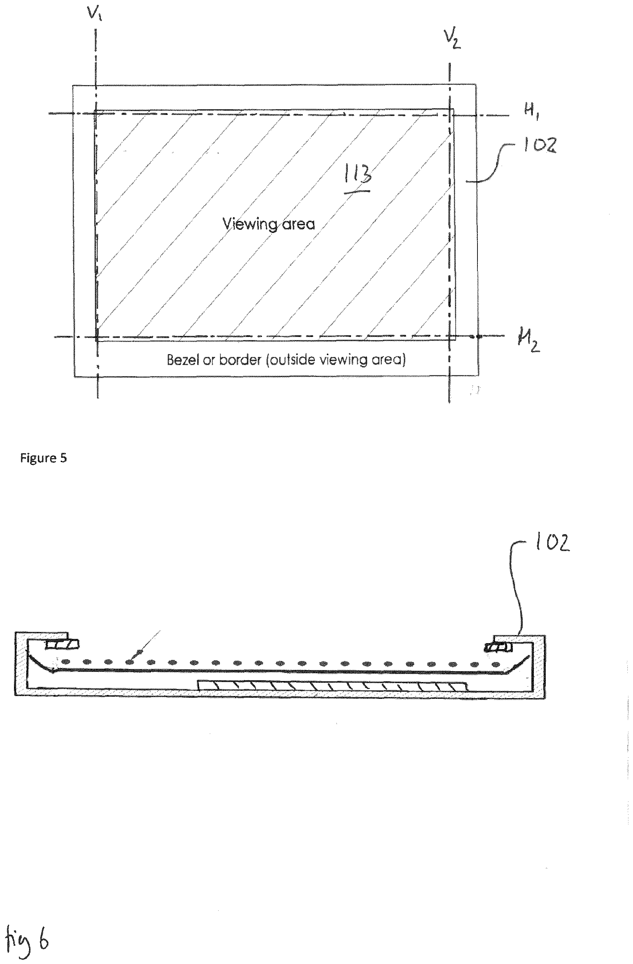

In figure 5 the FPD of figures 1 and 2 is shown with the location of cutting paths indicated by the parallel pairs of ghosted lines V1, V2 and H1, H2. The cutting paths define therewithin a sub-unit 113 of the LCD screen 103, which sub-unit is within the border or bezel 102 of the screen housing.

### Process and apparatus

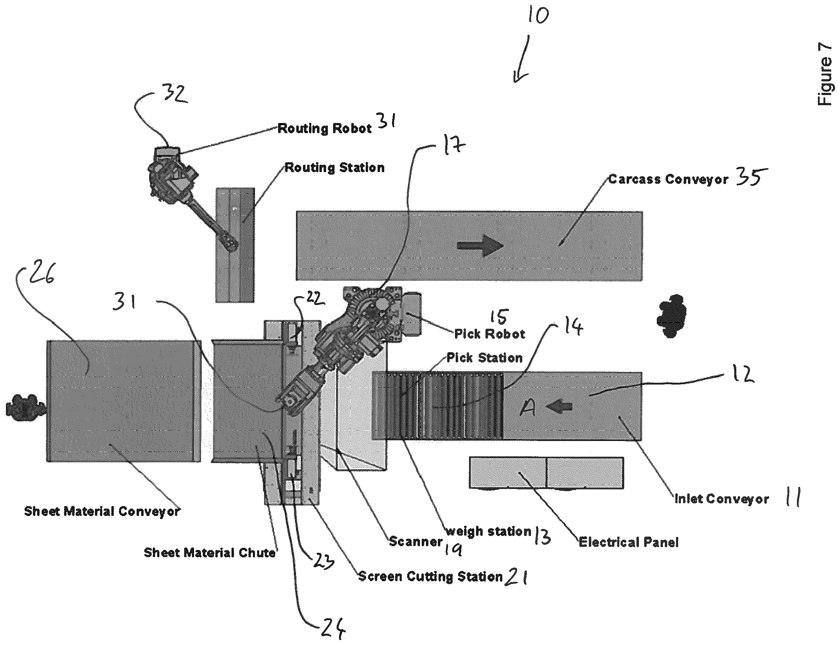

In a specific embodiment of the present invention a recycling apparatus for flat panel display units is shown generally as 10 in figure 7. As an initial step end of life backlit LCD TV sets or monitors are stripped of any appendages such as external cables and loose stands. The remaining FPD unit (such as those described above with reference to figures 1 to 4) is then manually loaded, screen panel down, and aligned square-on to an elongate inlet feed conveyor 11 comprising a moving conveyor belt 12 which transports the FPD in a longitudinal in feed direction of travel (arrow A).

The conveyor feeds to a weigh station 13 having a series of transverse weigh members 14. The FPD abuts a corner stop which corresponds to a weighing position. The weigh members are then shifted to project upwards to lift the FPD so that the weight is taken by the weigh members and can then be derived from associated pressure sensors/cells (not shown). The logged weight may be communicated to the control system 30, which comprises a data processing system and data storage for the system. The weight is compared to weights for known and characterised FPD units. The weight (+/an acceptable tolerance) may give a single FPD match, or a set of possible TVs/monitors/units which might be matches.

An optical scanner 19 is a 3-D scanner which is used to further characterise the FPD. So the set of possible FPDs can be reduced by using the scanner to measure one or more dimensions. If a match is made then pre-loaded processing data and parameters for that set may be invoked to facilitate the subsequent processing.

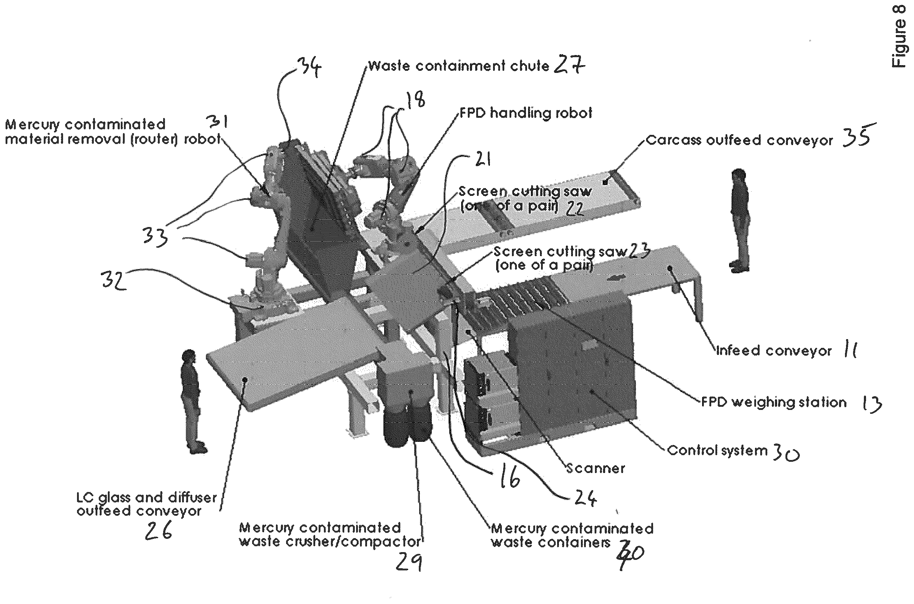

For example, in identifying a specific TV set, the weight information is communicated to a data processing system server (see control system 30 in figure 8) which includes a stored look-up table of TV sets/monitors by weight. If several candidates are identified the data processing system invokes a dimension measurement step, which is then carried out on the weighing station by using automated calipers or clamps which span the height and/or width of the TV to measure these. Alternatively the scanner may be used to derive dimension information. This then allows a further look up table of TV dimensions to be used to identify a candidate TV set. The pre-loaded processing data and parameters are used to guide the following cutting and routing operations, so that they may be automated according to predicted dimension and configuration data for each TV set.

If the set is not identified a manual process may be invoked with the TV brand and model being logged manually by an operator. The appropriate cutting and routing positions and extents are logged when carried out with the robot arms under manual control. This tool operation data is stored for use to allow automation of the processing of the 'new' TV set in the future, with the look-up tables updated appropriately to reflect the newly entered TV set/monitor. The weight value and a sequential identifier code for the FPD are sent to a data processing server in the control system 30 and stored.

Alternatively an automatic FPD characterisation step may be invoked in which the scanner is used to identify the display screen and its visible area, and its disposition with respect to housing edges or corners. From this a new cutting protocol may be derived. This may be translated into a series of instructions for the robot arm, turntable and the cutting tools.

An FPD handling robot arm 15 is provided attached to a frame 16 located adjacent the weigh station end, as shown in the figure 8. The robot arm 15 is provided with a turntable base 17 and various articulated joints 18, and a gripper claw 31 for picking up a free corner region of the FPD. The robot is pre-programmed to approach the free corner and apply controlled pressure so as to grip but not crush the FPD free corner. The arm then sweeps the FPD past the optical scanner 19. The scanner measures screen panel height and width, and location with respect to any perimeter frame or bezel of the FPD housing. The data processing system stores the dimension data necessary to be able to isolate the screen panel's location and extent with respect to the gripper position. Should the scanned data not correlate with the pre-loaded data it may be assumed that the FPD is damaged, and it is therefore rejected from further processing by the apparatus and sent for manual processing.

The gripper may include pressure sensors. Should a sudden reduction in pressure be felt, corresponding to mechanical compromise or crushing of the FPD, then the FPD is rejected from further processing and placed by the robot arm onto an outfeed conveyor 20. An alert signal is generated by the data processing system so as to prompt the intervention of an operator who will decide how best to treat the FPD by alternative measures (such as manual disassembly).

Having established the screen size, weight and location on the FPD front surface, the robot arm transports the FPD to a cutting station 21. The cutting station has first and second spaced apart rotary cutting saws 22,23. The first and second saws are aligned coaxially and define therebetween a cutting spacing and parallel cutting lines. The second saw 23 is mounted on a traveller 24 so that the saw separation may be varied by travel towards or apart from the first saw blade 22. The data processing system selects a cutting separation corresponding to the desired cutting width or height dimension of the screen panel, or a short distance under this.

The FDP unit is placed face down on the cutting table 25 which is mounted on the frame at an angle of greater than zero and less than 45 (about 30 degrees) from the horizontal. The cut is made by the robot arm translating the screen in a cutting direction, over the cutting saws from one edge region of the FPD unit to the opposite side. The cut depth is usually set to cut through the screen panel thickness and plastic diffuser sheet/films, but not so deep as to shatter the CCFL tubes (if present) behind the screen panel. Once a first cut has been made the FPD is rotated 90 degrees by the robot arm and a second pair of cuts are made, perpendicular in direction with respect to the first cuts. In this way a unitary rectangular cut-out sub-unit 113 (figure 5) of screen panel 103 is produced. Having made the cuts, the robot arm lifts the FPD unit from the table 25, leaving behind a cut-out rectangular glass screen panel and plastic diffuser panel and or protective sheeting/films (underlying the screen) on the table. The slope allows the cut-out panel (and any attached diffuser panel or films) to slide away down onto an outfeed conveyor 26, shown in figure 7. The glass panel is then subject to further processing (not shown), and recycling elsewhere.

In the event that CCFL tubes are present the first robot arm is instructed to move the FDP chassis unit to a position above a hopper 27 located to one side of the cutting table and out feed conveyor, as shown in figure 8. The hopper feeds into a shredding rotor (not visible) which in turn feeds (via an Archimedes screw) into a waste crusher/compactor/shredder 29. The compactor includes collection bins 40 which are removable for safe disposal or further treatment.

A second robot arm 31 is provided on an opposite side of the hopper. The arm has a turntable base 32 and articulated joints 33. A distal end of the arm is provided with a router tool 34. The router tool is then directed by the control system to move in inside the cut-out aperture left by the removed screen panel so as to shatter CCFL tubes and displace any associated retaining mounts and tube ends. The FPD unit is angled so as to present the cut-out aperture to the second robot arm router, but also to ensure that routed pieces of the CCFL and retainers etc. fall down into the hopper under gravity. The CCFL pieces will typically be contaminated with mercury and phosphate and are therefore further crushed and compacted, and then collected in the bins 40 (UN certified contaminant containers) which may be hermetically sealed for transport, decontamination or further treatment.

The remaining FPD unit carcass - comprising housing, PCBs/electrical components and internal chassis frame is (after the routing is complete) placed flat onto a carcass outfeed conveyor 35 which is positioned to have one end adjacent the base of the first robot arm and the opposite end adjacent, but spaced apart from, the infeed conveyor. In this way a single person may deal with manual FPD unit feeding-in and collecting out-fed FPD chassis due to the proximity of conveyors.

Once the chassis is placed on the outfeed conveyor, the data processing system is configured to alert an operative of the FPD type and status, so that it is removed to the appropriate location for any further processing or disassembly.

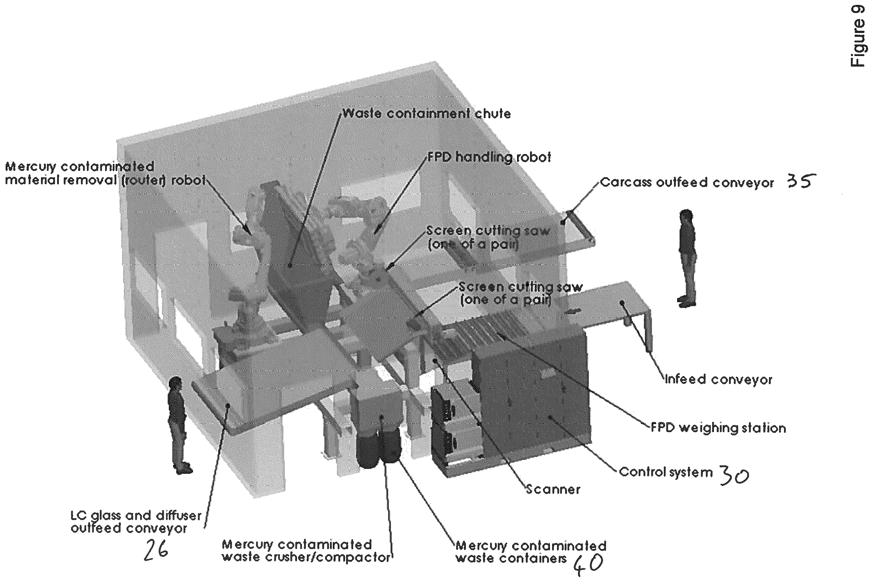

The apparatus is typically disposed within a 'clean room' or other containment enclosure within a larger work space, as shown in figure 9. The infeed conveyor 11, collection bins 40 and outfeed conveyors 26,35 are disposed so as to be accessible from outside the enclosure, via curtained apertures.

In normal use there would be no reason for a person to enter the processing area inside the enclosure, so reducing the risk of mercury contamination and hazard from cutting or routing dust. As an additional measure, forced extraction of air from the enclosure takes place via a filtration system (not shown) so as to prevent escape of mercury to the atmosphere outside the enclosure.

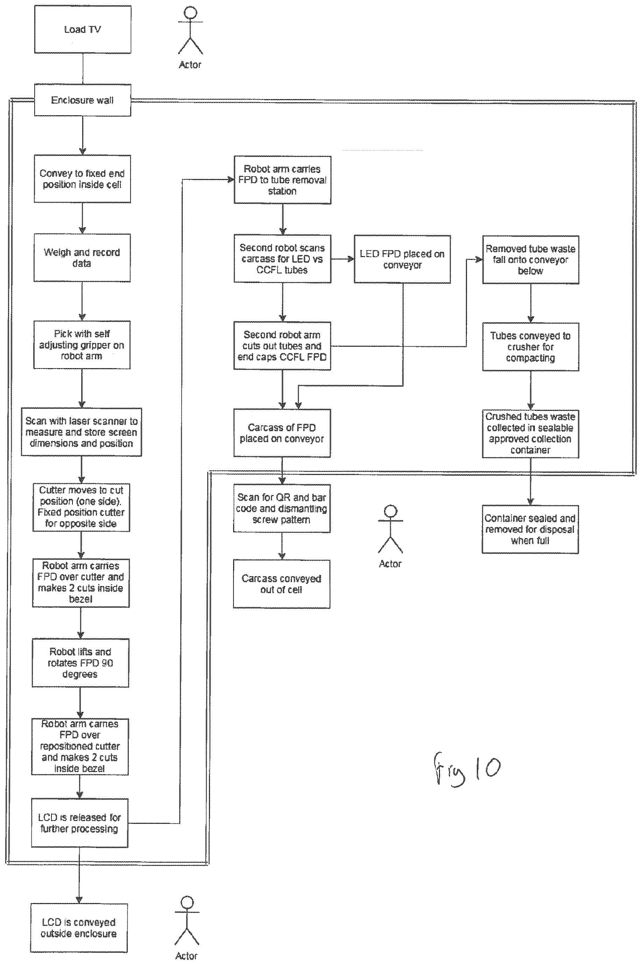

The above method is particularly appropriate for CCFL backlit FPD TV sets. It can also be used to process LCD FPD TV sets which are backlit by LEDs. The process is summarised in the flow chart shown in figure 10.

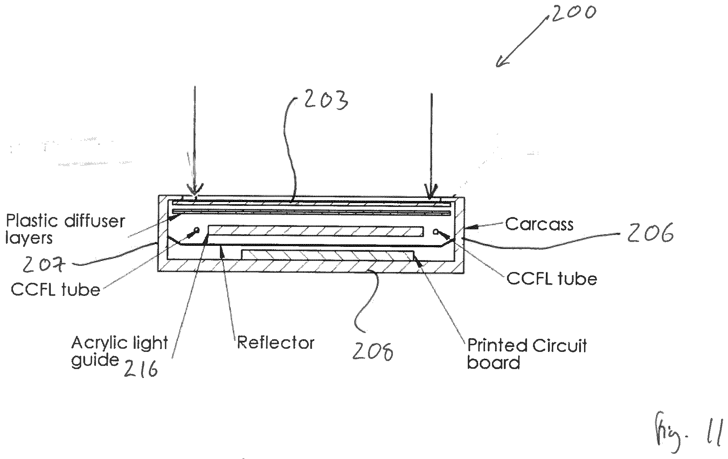

For computer monitors with backlit LCD screens 203 the internal arrangement often relies upon indirect illumination using a light guide panel 216, as shown in figure 3. In this case, rather than cutting out a portion of the LCD screen panel (as described above), the end regions containing the CCFL tubes can be completely cut off using one pair of parallel cuts C1, C2 in figure 11. The CFFL tubes inside the cut-off edge regions will be intact if the cut is positioned appropriately. These end regions can then be conveyed out of the enclosure for further treatment. Alternatively they can be placed into the shredding hopper and the FPD carcass/chassis with remaining central screen portion placed on the outfeed conveyor 35.

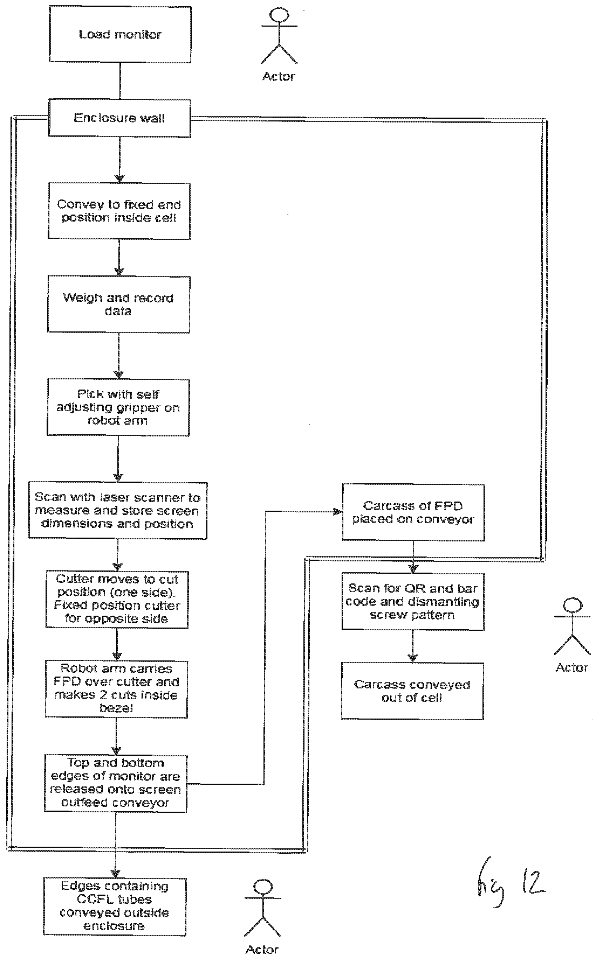

The above monitor processing method is summarised in the flow chart figure 12.

### Statements of Invention

According to the present invention there is provided apparatus for the disassembly of flat panel display units (FPDs) as set out in the numbered paragraphs hereinafter.
1. Apparatus for the disassembly of flat panel display units (FPDs) which each comprise a display screen provided on the front face of the FPD and a housing which accommodates the screen and associated electronic circuitry, the apparatus comprising:
   (i) a cutting station for receiving an end-of-life FPD, the cutting station being configured and arranged to make cuts into the FPD along cutting paths which permit detachment of the entire display screen, or a cut-out sub-unit of the display screen, from the FPD,
   (ii) an FPD characterisation station provided in advance of, or at, the cutting station, the characterisation station being adapted to measure and/or log one or more characterising parameters or identifiers of the FPD in advance of the cutting step,
   (iii) a data processing system in data communication with the FPD characterisation station, the data processing system being adapted to receive and one or more of said parameters or identifiers, and derive therefrom an appropriate protocol for cutting the FPD display screen, and provide instructions in accordance with the protocol which are sent back to the cutting station so as to control the cuts.
2. Apparatus as set out in paragraph 1 wherein an FPD database is associated with the data processing system, the FPD database being pre-loaded with cutting path instructions for a range of known FPDs,
3. Apparatus as set out in paragraph 2 wherein the FPD database further comprises one or more stored characterising parameters or identifiers of each of the known FPDs.
4. Apparatus as set out in in paragraph 3 wherein the data processing system is adapted to compare one or more characterisation parameter or identifier obtained from the characterisation station for a characterised FPD with one or more counterpart characterisation parameter or identifier stored in the database so as to identify a matching stored FPD, or closest match to a stored FPD, or in the absence of these a null a result.
5. Apparatus as set out in paragraph 4 wherein in the event of a match, the data processing retrieves the appropriate protocol for cutting that FPD display screen and sends instructions in accordance with the protocol to the cutting station.
6. Apparatus as set out in any of the preceding paragraphs wherein the characterisation station comprises a weigh station adapted to weigh the FPD so as to obtain a measured weight value for the FPD, which value serves as one characterisation parameter.
7. Apparatus as set out in paragraph 6 wherein the weight value is sent to the data processing system, the measured FPD weight value being compared with the associated database which comprises known FPD weights so as to obtain one or more candidate FPD matches based upon identical weight, or closest weight, thereby determining the appropriate cutting protocol for the screen cutting.
8. Apparatus as set out in any of the preceding paragraphs wherein the FPD characterisation station comprises an optical scanner, and preferably a 3-D scanner.
9. Apparatus as set out in paragraph 8 wherein the optical scanner is adapted to measure one or more dimensional variable of the FPD.
10. Apparatus as set out in paragraph 9 where in the dimensional variable comprises one or more of: FPD housing width and or length and/or diagonal extent, visible display screen width and/or length, and/or diagonal extent.
11. Apparatus as set out in paragraph 9 or 10 wherein the dimensional variable or variables is/are compared to corresponding known FPD dimension variables provided in the database, so as to permit matching based upon identical, or closest, dimension variable(s), with the appropriate cutting protocols paths thereby being retrieved.
12. Apparatus as set out in paragraph 11 wherein the optical scanner's measured dimension variables concern the disposition of the screen area within the front face of the FPD, so as to determine appropriate cutting paths directly from the FPD itself.
13. Apparatus as set out in any of the preceding paragraphs wherein in the event or a null match, or a match outside of a pre-determined acceptable tolerance, the characterisation parameter(s) or identifier(s) obtained are used to populate a new database entry for that FPD.
14. Apparatus as set out in paragraph 13 wherein the data processing system instigates the characterisation station to obtain further parameters and/or identifiers beyond those obtained when arriving at the null match or out of tolerance match, and wherein these are stored in said new database entry for that FPD.
15. Apparatus as set out in paragraph 13 or 14 wherein upon determination of an unknown FPD by the null match or intolerant match, the data processing system prompts the creation of a new cutting protocol for that FPD.
16. Apparatus as set out in paragraph 15 wherein the new protocol is created using scanned dimension and configuration information obtained from the optical scanner.
17. Apparatus as set out in paragraph 15 or 16 wherein the new cutting protocol is provided at least in part by manual operator measurement and data entry.
18. Apparatus as set out in any of the preceding paragraphs wherein the FPD is provided with a visible unique identifier on an external surface of the FPD and the characterisation station comprises a visible identifier reader, comprising a camera or scanner.
19. Apparatus as set out in paragraph 18 wherein the visible identifier comprises a product serial number or a barcode.
20. Apparatus as set out in paragraph 18 or 19 wherein the visible identifier reader comprises an optical character recognition (OCR) vision tool for reading the serial number.
21. Apparatus as set out in paragraph 18 or 19 wherein the visible identifier reader comprises a barcode/QR code reader vision tool for reading the barcode.
22. Apparatus as set out in any of paragraphs 18 to 21 wherein the visible identifier reader obtains the unique identifier from the FPD and compares this with each entry of a pre-populated database of said identifiers.
23. Apparatus as set out in any of paragraphs 18 to 22 wherein the visible identifier is matched to an identity defined by the product brand and model number.
24. Apparatus as set out in paragraph 23 wherein the data processing system is adapted to log the identity of each end-of-life FPD processed so as to provide an audit of FPD brands and/or models processed over time by the apparatus.
25. Apparatus as set out in any of the preceding paragraphs comprising a first robot arm for manipulating the end-of-life FPD into appropriate cutting orientations during the cutting process, in accordance with the protocol.
26. Apparatus as set out in any of the preceding paragraphs comprising an infeed conveyor for conveying FPDs sequentially to the cutting station.
27. Apparatus as set out in paragraph 26 and configured to receive each FPD for transit in a face down orientation.
28. Apparatus as set out in any preceding paragraph wherein the cutting station comprises at least one saw tool or milling tool for cutting the screen.
29. Apparatus as set out in any of the preceding paragraphs wherein the cutting station comprises a first tool and at least one further tool for cutting the screen.
30. Apparatus as set out in paragraph 28 or 29 wherein the respective tools are adapted to have generally parallel cutting paths separated by a span distance.
31. Apparatus as set out in paragraph 29 or 30 wherein the first tool is fixed and wherein the further tool is adapted to travel with respect to the first cutting tool, so as to permit a variation in the cutting span to a predetermined distance depending upon one or more dimensions of the FPD screen to be cut.
32. Apparatus as set out in any preceding paragraph wherein the cutting station is provided with means for rotating the FPD about a vertical rotation axis after cutting of the display screen along paths in a first direction, thereby to allow cutting of the screen along paths in a second direction perpendicular to the first direction so as to produce the said generally rectilinear sub-unit of the display screen.
33. Apparatus as set out in paragraph 32 wherein the means for rotating comprises the first robot arm.
34. Apparatus as set out in any of the preceding paragraphs wherein the FPDs are backlit LCD display FPDs which each comprise an LCD display screen which occupies a front face of the FPD and a housing which accommodates the LCD display screen, with one or more CCFL tubes or an LED array disposed adjacent a backside of the LCD display screen to serve as backlighting.
35. Apparatus as set out in paragraph 34 wherein the housing including a front border region which serves as a frame around the LCD display screen and wherein the cutting station is adapted to cut directly into the LCD display screen along cutting paths which are offset inwardly from the front border region so as to create a generally rectilinear sub-unit of the display screen within the edges of the screen.
36. Apparatus as set out in paragraph 35 and comprising a screen sub-unit conveyor for conveying the screen sub-unit to a location spaced apart from the cutting station, for storage, disposal or further processing of the sub-unit.
37. Apparatus as set out paragraph 35 or 36 and further comprising a backlight treatment station, which station is for receiving each FPD chassis after removal of the screen sub-unit, the treatment station is provided with a mechanical means adapted to remove backlights rendered accessible the screen sub-unit removal.
38. Apparatus as set out in paragraph 37 wherein the mechanical means comprises a mechanical tool for dislodging and/or disintegrating CCFL tubes, such as a router or grinder or flail or brush.
39. Apparatus as set out in paragraph 37 or 38 wherein the mechanical means comprises a mechanical tool for dislodging and removing LED backlighting arrays, such as a router or grinder or flail.
40. Apparatus as set out in any of paragraphs 37 to 39 wherein the mechanical means or tool is attached to and directed by a further robot arm.
41. Apparatus as set out in any of paragraphs 37 to 40 wherein the database comprises a pre-loaded mechanical treatment protocol to be followed by the mechanical means or tools when removing the backlighting of the FPD and wherein the data processing system is in data communication with the treatment station, the protocol guiding the operation of the mechanical means or tool.
42. Apparatus as set out in any of paragraphs 37 to 41 wherein the mechanical means comprises a router and routing takes place by scanning the router incrementally back and forth across and within the aperture defined by removal of the LCD screen sub-unit.
43. Apparatus as set out in any of paragraphs 37 to 42 wherein a collector in the form of a hopper or chute is provided under the backlight treatment station for collecting dislodged backlight elements or debris.
44. Apparatus as set out in paragraph 43 wherein the first robot arm holds the FPD chassis angled face-down over the hopper or chute, so that any removed tube or LED material falls directly into the hopper or chute.
45. Apparatus as set out in paragraph 44 wherein the FPD is angled in an inclined orientation of 10 to 80 degrees from the vertical.
46. Apparatus as set out in any of paragraphs 43 to 45 wherein the collector is arranged and configured to feed collected material into a shredder/ crusher/compactor.
47. Apparatus as set out in paragraph 46 wherein crushed or shredded tube material is used to fill storage containers which are hermetically sealed for disposal or further processing.
48. Apparatus as set out in any of paragraphs 44 to 47 wherein after backlight removal the robot arm is instructed to place the FPD carcass onto an exit conveyor for subsequent storage, downstream processing, recycling or disposal.
49. Apparatus as set out in any of the preceding paragraphs which is located in an isolation cell which conditions and/or removes from the internal air volume dust and debris generated in the process.
50. Apparatus as set out in paragraph 49 wherein the isolation cell defines a clean room environment provided with means for removal of air-entrained hazardous particles or gases.
51. Apparatus as set out in any of the preceding paragraphs wherein the process apparatus incudes an air extraction system in which extraction vents are provided in the region of the cutting station and/or the backlight treatment station and/or the debris collector so that air-entrained debris ejected by or from the cutting and or backlight treatment stations is extracted and accumulated for disposal or recycling.
52. Apparatus as set out in any of the preceding paragraphs wherein air blowers are provided adjacent the cutting station and/or backlight treatment station for driving off particles and dust created by the screen cutting or backlight dislodging.
53. A process as set out in any of the preceding paragraphs wherein the FPD is delivered to the cutting station in a face-down orientation, with the cutting blades extending upwards to effect cutting of the display screen.
54. A process for the disassembly of FPDs which each comprise a display screen provided on the front face of the FPD and a housing which accommodates the screen and associated electronic circuitry, the process comprising providing apparatus in accordance with any of the preceding paragraphs, characterising the FPD and retrieving an appropriate cutting protocol from the data processing system, cutting the FPD in accordance with the protocol by making cuts into the FPD along cutting paths which permit detachment of the entire display screen, or a cut-out sub-unit of the display screen, from the FPD chassis, optionally treating the FPD chassis at a mechanical treatment station to remove or dislodge any backlights behind the display screen or screen sub-unit.
55. A process for the disassembly of FPDs which each comprise a display screen provided on the front face of the FPD and a housing which accommodates the screen and associated electronic circuitry, the process comprising providing apparatus in accordance with any of paragraphs 1 to 53, characterising the FPD and constructing an appropriate cutting protocol for that FPD, cutting the FPD in accordance with the protocol by making cuts into the FPD along cutting paths which permit detachment of the entire display screen, or a cut-out sub-unit of the display screen, from the FPD chassis, optionally treating the FPD chassis at a mechanical treatment station to remove or dislodge any backlights behind the display screen or screen sub-unit.
56. A process in accordance with paragraph 55 wherein the constructed cutting protocol is stored as a database entry for that model of FPD, whereby the cutting protocol may subsequently be retrieved and utilized should the same model of FPD be identified in the characterisation step for a subsequently processed FPD.

## Claims

1. Apparatus for the disassembly of flat panel display units (FPDs) which each comprise a display screen provided on the front face of the FPD and a housing which accommodates the screen and associated electronic circuitry, the apparatus comprising:
(i) a cutting station for receiving an end-of-life FPD, the cutting station being configured and arranged to make cuts into the FPD along cutting paths which permit detachment of the entire display screen, or a cut-out sub-unit of the display screen, from the FPD,
(ii) an FPD characterisation station provided in advance of, or at, the cutting station, the characterisation station being adapted to measure and/or log one or more characterising parameters or identifiers of the FPD in advance of the cutting step,
(iii) a data processing system in data communication with the FPD characterisation station, the data processing system being adapted to receive one or more of said characterising parameters or identifiers, and derive or attempt to derive therefrom an appropriate protocol for cutting the FPD display screen, and provide instructions in accordance with the protocol which are sent back to the cutting station so as to control the cuts,
wherein an FPD database is associated with the data processing system, the FPD database being pre-loaded with cutting path instructions for a range of known FPDs, the database further comprising one or more stored characterising parameters or identifiers of each of the known FPDs.

2. Apparatus as claimed in claim 1 wherein the data processing system is adapted to compare one or more characterisation parameter or identifier obtained from the characterisation station for a characterised FPD with one or more counterpart characterisation parameter or identifier stored in the database so as to identify a matching stored FPD or in the absence of this a null result.

3. Apparatus as claimed in claim 2 wherein in the event of a null result, the characterisation parameter(s) or identifier(s) obtained are used to populate a new database entry for that FPD.

4. Apparatus as claimed in claim 3 wherein the data processing system instigates the characterisation station to obtain further parameters and/or identifiers beyond those obtained when arriving at the null result, and wherein these are stored in said new database entry for that FPD.

5. Apparatus as claimed in any of claims 2 to 4 wherein upon determination of an unknown FPD by the null result, the data processing system prompts the creation of a new cutting protocol for that unknown FPD.

6. Apparatus as claimed in claim 5 wherein the new cutting protocol is created using scanned dimension and configuration information obtained from an optical scanner.

7. Apparatus as claimed in claim 5 or 6 wherein the new cutting protocol is provided at least in part by manual operator measurement and data entry.

8. Apparatus as claimed in claim 2 wherein in the event of a match, the data processing retrieves the appropriate protocol for cutting that FPD display screen and sends instructions in accordance with the protocol to the cutting station.

9. Apparatus as claimed in any of the preceding claims wherein the characterisation station comprises a weigh station adapted to weigh the FPD so as to obtain a measured weight value for the FPD, which value serves as one characterisation parameter.

10. Apparatus as claimed in any of the preceding claims wherein the FPD characterisation station comprises an optical scanner, preferably a 3-D scanner.

11. Apparatus as claimed in any of the preceding claims wherein the FPD is provided with a visible unique identifier on an external surface of the FPD and the characterisation station comprises a visible identifier reader.

12. Apparatus as claimed in claim 11 wherein the visible identifier reader comprises a camera or scanner.

13. Apparatus as claimed in claim 11 or 12 wherein the visible identifier comprises a product serial number or a barcode.

14. Apparatus as claimed in any of claims 11 to 13 wherein the visible identifier reader comprises an optical character recognition (OCR) vision tool for reading the serial number.

15. Apparatus as claimed in claim 13 wherein the visible identifier reader comprises a barcode/QR code reader vision tool for reading the barcode.

16. Apparatus as claimed in any of claims 11 to 15wherein the visible identifier reader obtains the unique identifier from the FPD and compares this with each entry of a pre-populated database of said identifiers.

17. Apparatus as claimed in any of claims 11 to 16 wherein the visible identifier is matched to an identity defined by the product brand and optionally model number.

18. Apparatus as claimed in any of claims 11 to 17 wherein the data processing system is adapted to log the identity of each end-of-life FPD processed so as to provide an audit of FPD brands and/or models processed over time by the apparatus.

19. A process for disassembly of a flat panel display unit conducted using apparatus in accordance with any of the preceding claims.
